# EUROPÄISCHE PATENTSCHRIFT

(11) **EP 2 932 819 B1**
(45) Veröffentlichungstag und Bekanntmachung des Hinweises auf die Patenterteilung: **05.07.2017**
(21) Anmeldenummer: 15158337.4
(22) Anmeldetag: 10.03.2015
(51) Int. Cl.: A01D 34/66, A01B 59/00

(54) **ARBEITSGERÄT FÜR EINE LANDWIRTSCHAFTLICHE ARBEITSMASCHINE**
WORK DEVICE FOR AN AGRICULTURAL WORK MACHINE
APPAREIL DE TRAVAIL POUR MACHINE DE TRAVAIL AGRICOLE

(30) Priorität: 13.03.2014 DE 102014103411
(43) Veröffentlichungstag der Anmeldung: 21.10.2015
(73) Patentinhaber: CLAAS Saulgau GmbH, 88348 Bad Saulgau (DE)
(72) Erfinder: Ober, Martin, 78736 Epfendorf-Trichtingen (DE)

(56) Entgegenhaltungen:
- DE-A1- 10 234 741
- DE-A1-102004 028 537
- US-A- 6 116 009

## Beschreibung

Die Erfindung betrifft ein gemäß dem Oberbegriff des Anspruchs 1 ausgebildetes Arbeitsgerät für eine selbstfahrende landwirtschaftliche Arbeitsmaschine, wie z.B. einen Traktor.

Ein Arbeitsgerät der eingangsgenannten Art ist z.B. aus DE 102 34 741 A1 bekannt. Ein Arbeitsorgan dieses z.B. als Mähwerk ausgebildeten Arbeitsgerätes ist über eine horizontal und in Fahrtrichtung der Arbeitsmaschine verlaufende Gelenkachse bzw. Arbeitsorganschwenkachse mit einem Traggestell verbunden, das an einer heckseitig vorgesehen Dreipunktaufnahme der Arbeitsmaschine aufgenommen ist, so dass sich das Arbeitsgerät quer zu einer Fahrtrichtung bzw. Längsrichtung der Arbeitsmaschine erstreckt.

Beim mittels der Dreipunktaufnahme Aufnehmen von solchen Arbeitsgeräten tritt insbesondere bei als seitenaufgehängtes Heckmähwerk ausgebildeten Arbeitsgeräten oft das Problem auf, dass das sich näher am mit dem Arbeitsorgan versehenen Gestelllängsende befindende Fangprofil des z.B. als Dreipunktbock ausgebildeten Traggestells von dem Fanghaken des dazu korrespondierenden Unterlenkers der Dreipunktaufnahme zuerst eingefangen wird. Dadurch wird das Traggestell um den Hauptdrehpunkt bzw. die Arbeitsorganschwenkachse verschwenkt, so dass der Fanghaken des anderen Unterlenkers das dazu korrespondierende Fangprofil des Traggestells nicht mehr einfangen kann. Dieses Problem tritt häufig speziell bei Mähwerken auf, da hier eine Spindel einer Hubstrebe bzw. Hubstange des näher am mit dem Arbeitsorgan versehenen Gestelllängsende angeordneten Unterlenkers oft etwas höher eingestellt wird, um das Traggestell im Mähbetrieb und bei aktiver Entlastung waagrecht zu halten.

Der Erfindung liegt die Aufgabe zugrunde, ein Arbeitsgerät gemäß dem Oberbegriff des Anspruchs 1 bereitzustellen, so dass das Arbeitsgerät zuverlässiger von der Mehrpunktaufnahme des Arbeitsgerätes aufnehmbar ist.

Dies wird mit einem Arbeitsgerät gemäß Anspruch 1 erreicht. Weiterbildungen der Erfindung sind in den abhängigen Ansprüchen definiert.

Gemäß der Erfindung wird bereitgestellt ein Arbeitsgerät für eine landwirtschaftliche Arbeitsmaschine, welche zum Anbringen des Arbeitsgerätes an einem Maschinenlängsende eine Mehrpunktaufnahme mit zwei länglichen Unterlenkern aufweist, die mit vorbestimmtem Lenkerabstand voneinander längsseits nebeneinander angeordnet sind und die jeweils ein erstes Unterlenkerlängsende, an dem ein nach oben offener Fanghaken vorgesehen ist, und ein zweites Unterlenkerlängsende aufweisen, das an der Arbeitsmaschine gelagert ist, so dass der Fanghaken höhenverstellbar ist, wobei das Arbeitsgerät aufweist: ein Traggestell mit einem Gestelllängsende, an dem ein Arbeitsorgan des Arbeitsgerätes vorgesehen ist, und zwei Fangprofilen, die mit dem vorbestimmten Lenkerabstand voneinander nebeneinander an einer Gestelllängsseite des Traggestells angeordnet sind, so dass in einer Abgelegtstellung des Arbeitsgerätes durch mittels Anhebens der Fanghaken Unterfangen der beiden Fangprofile das Traggestell mit der Gestelllängsseite quer zu einer Maschinenlängsrichtung verlaufend an der Mehrpunktaufnahme aufnehmbar ist.

Das erfindungsgemäße Arbeitsgerät zeichnet sich dadurch aus, dass das Traggestell so eingerichtet, dass in der Abgelegtstellung des Arbeitsgerätes eines der beiden Fangprofile, welches sich näher am mit dem Arbeitsorgan versehenen Gestelllängsende befindet, um ein vorbestimmtes Differenzmaß höher als das andere der beiden Fangprofile angeordnet ist.

Dadurch, dass gemäß der Erfindung in der Abgelegtstellung des Arbeitsgerätes das Fangprofil, welches sich näher am mit dem Arbeitsorgan versehenen Gestelllängsende befindet, um das vorbestimmte Differenzmaß höher als das andere Fangprofil angeordnet ist, wird beim mittels der Mehrpunktaufnahme Aufnehmen bzw. Ankuppeln des Arbeitsgerätes an der Arbeitsmaschine zuerst das weiter vom mit dem Arbeitsorgan versehenen Gestelllängsende entfernte tiefer liegende Fangprofil vom Fanghaken des dazu korrespondierenden Unterlenkers eingefangen bzw. mit diesem verrastet. Anschließend wird durch Hochbewegen des Unterlenkers das Traggestell um einen Anbindungspunkt des Arbeitsorgans (z.B. um die Arbeitsorganschwenkachse) nach oben gedreht, bis auch das sich näher am mit dem Arbeitsorgan versehenen Gestelllängsende befindende Fangprofil vom Fanghaken des dazu korrespondierenden Unterlenkers eingefangen wird bzw. mit diesem verrastet. Auf diese Weise kann das Arbeitsgerät stets zuverlässig von der insbesondere als Dreipunktaufnahme ausgebildeten Mehrpunktaufnahme des Arbeitsgerätes aufgenommen werden.

Gemäß der Erfindung kann das mit der Mehrpunktaufnahme versehene Maschinenlängsende eine Heckseite oder eine Frontseite der Arbeitsmaschine sein.

Gemäß der Erfindung ist die Abgelegtstellung des Arbeitsgerätes eine Stellung, in der das Arbeitsgerät nicht an der Arbeitsmaschine angebracht ist und auf einer Ablagefläche wie z.B. dem Boden abgelegt ist, so dass es für die Arbeitsmaschine zum mittels der Mehrpunktaufnahme Aufnehmen des Arbeitsgerätes zugänglich ist.

Gemäß der Erfindung bedeutet das Unterfangen eines Fangprofils, dass der Fanghaken durch Hochbewegen dessen mit seiner Öffnung von unten her das zugeordnete Fangprofil einfängt, d.h. der Fanghaken das Fangprofil mit seiner Fanghakenkavität von unten her umgreift.

Gemäß einer Ausführungsform der Erfindung ist an dem Traggestell eine Stützvorrichtung vorgesehen, welche eingerichtet ist, dass Traggestell in der Abgelegtstellung des Arbeitsgerätes auf einer Ablagefläche abzustützen, so dass das sich näher am mit dem Arbeitsorgan versehenen Gestelllängsende befindende eine Fangprofil um das vorbestimmte Differenzmaß höher als das andere Fangprofil der beiden Fangprofile angeordnet ist.

Mit einer derartigen Stützvorrichtung kann auf einfache und robuste Weise die erfindungsgemäß zu erzielende Höhenanordnung der beiden Fangprofile sichergestellt werden.

Gemäß einer weiteren Ausführungsform der Erfindung ist die Stützvorrichtung höhenverstellbar ausgebildet, so dass das Differenzmaß selektiv veränderbar ist. Auf diese Weise lässt sich das Differenzmaß an unterschiedliche Umgebungsbedingungen wie z.B. unterschiedliche Ausführungen und Einstellungen der Mehrpunktaufnahme und die Beschaffenheit der Auflagefläche anpassen. Somit ist das Arbeitsgerät flexibel anpassbar, um stets eine zuverlässige Aufnehmbarkeit dessen an der Mehrpunktaufnahme zu gewährleisten.

Gemäß noch einer Ausführungsform der Erfindung ist zusätzlich oder alternativ zur erfindungsgemäßen Konfiguration der Stützvorrichtung eine jeweilige höhenmäßige Anordnung der beiden Fangprofile an der Gestelllängsseite des Traggestells so realisiert, dass in der Abgelegtstellung des Arbeitsgerätes das sich näher am mit dem Arbeitsorgan versehenen Gestelllängsende befindende eine Fangprofil um das vorbestimmte Differenzmaß höher als das andere Fangprofil angeordnet ist.

Damit kann auf einfache und robuste Weise das Erzielen der erfindungsgemäßen Höhenanordnung der beiden Fangprofile sichergestellt bzw. unterstützt werden.

Bevorzugt sind die beiden Fangprofile jeweils höhenmäßig unverstellbar an der Gestelllängsseite des Traggestells angeordnet.

Gemäß noch einer weiteren Ausführungsform der Erfindung kann jedoch zusätzlich oder alternativ zur erfindungsgemäßen Konfiguration der Stützvorrichtung zumindest eines der beiden Fangprofile höhenverstellbar an der Gestelllängsseite des Traggestells angebracht sein, so dass das höhenanordnungsmäßige Differenzmaß zwischen den Fangprofilen teilweise oder vollständig realisierbar ist.

Auf diese Weise lässt sich das Differenzmaß an unterschiedliche Umgebungsbedingungen wie z.B. unterschiedliche Ausführungen und Einstellungen der Mehrpunktaufnahme und die Beschaffenheit der Auflagefläche anpassen. Somit ist das Arbeitsgerät flexibel anpassbar, um stets eine zuverlässige Aufnehmbarkeit dessen an der Mehrpunktaufnahme zu gewährleisten.

Gemäß einer Ausführungsform der Erfindung ist die Höhenverstellbarkeit des Fangprofils motorfrei realisiert. Als Motor wird im Sinne der Erfindung jede Einrichtung verstanden, die mechanische Arbeit verrichtet, indem sie eine jeweils vorhandene Energieform in Bewegungsenergie umwandelt. Somit werden gemäß der Erfindung auch ein Hydraulikzylinder, ein Pneumatikzylinder oder Ähnliches als Motor angesehen. Durch die motorfreie Realisierung der Höhenverstellbarkeit ist diese mit besonders geringem Aufwand herstellbar.

Gemäß einer weiteren Ausführungsform der Erfindung ist die Höhenverstellbarkeit des Fangprofils mittels einer Linearführung an der Gestelllängsseite des Traggestells realisiert. Im Sinne der Erfindung braucht die Linearführung keine durchgehende Führung bereitzustellen, sondern können durch die Linearführung auch nur eine Mehrzahl von definierten in einer Linie verlaufenden Fixierpunkten in unterschiedlicher Höhe für das Fangprofil bereitgestellt werden. Die erfindungsgemäße Linearführung beschränkt sich hinsichtlich der geführten Verstellrichtung auf die erfindungsgemäß das Differenzmaß definierende Höhenrichtung und ist somit einfach, robust und mit geringem Aufwand herstellbar.

Gemäß noch einer Ausführungsform der Erfindung beträgt das Differenzmaß zwischen 10 Millimeter und 50 Millimeter. Bevorzugt beträgt das Differenzmaß etwa 20 Millimeter.

Gemäß noch einer Ausführungsform der Erfindung ist das Arbeitsgerät als ein seitenaufgehängtes Heckmähwerk ausgebildet.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand bevorzugter Ausführungsformen und unter Bezugnahme auf die beigefügten Figuren detaillierter beschrieben.
- Fig.1: zeigt eine schematische Teilansicht eines gemäß einer Ausführungsform der Erfindung ausgebildeten Arbeitsgerätes für eine landwirtschaftliche Arbeitsmaschine.
- Fig.2: zeigt eine schematische Seitenansicht einer als Dreipunktaufnahme ausgebildeten Mehrpunktaufnahme der Arbeitsmaschine.
- Fig.3: zeigt eine schematische Schnittansicht der Mehrpunktaufnahme von Fig. 2, gesehen entlang einer Linie A-A in Fig. 2

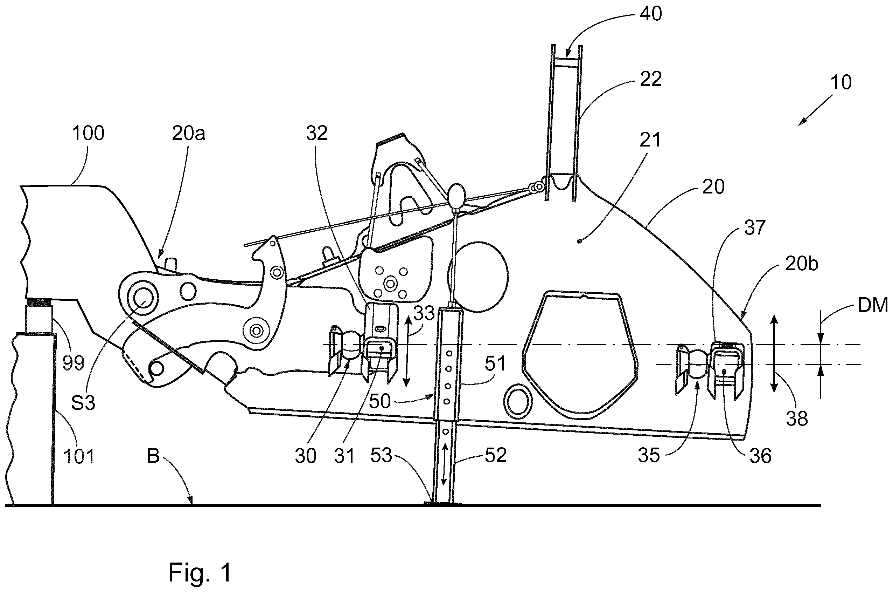

Im Folgenden werden unter Bezugnahme auf die Figuren 1 bis 3 erfindungsgemäße Ausführungsformen eines Arbeitsgerätes 10 für eine selbstfahrende landwirtschaftliche Arbeitsmaschine 1 - wie beispielsweise einen Schlepper oder Traktor - beschrieben.

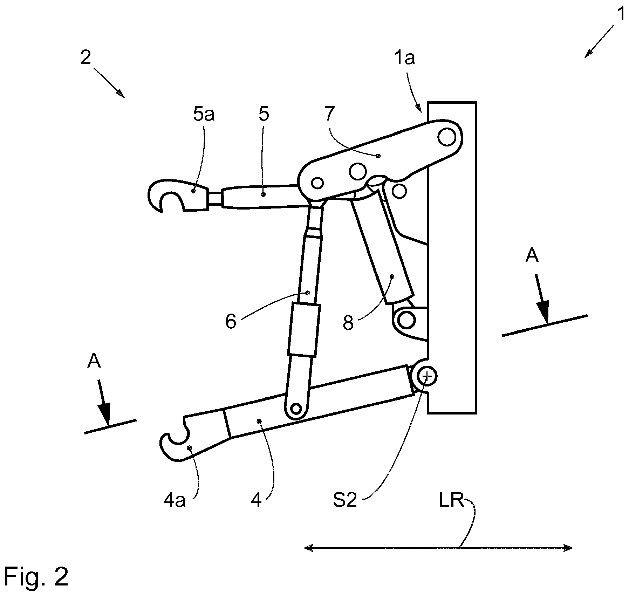

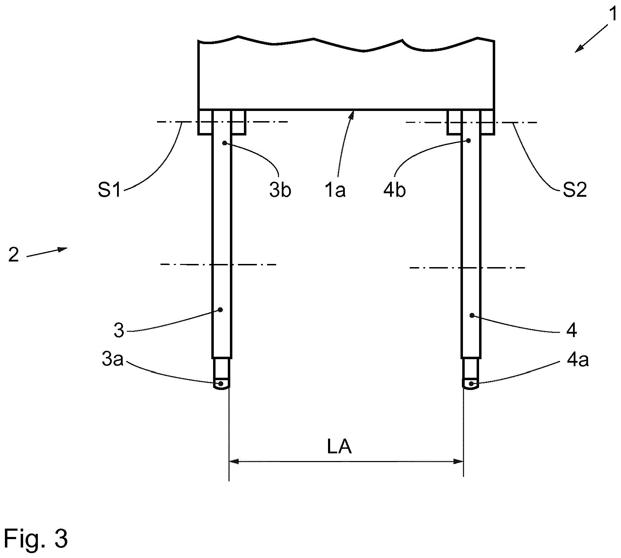

Gemäß den hier beschriebenen Ausführungsformen der Erfindung ist die Arbeitsmaschine 1 als Traktor ausgebildet, welcher als in einer Längsrichtung LR der Arbeitsmaschine 1 entgegengesetzte Maschinenlängsenden eine nicht gezeigte Frontseite und eine in den Figuren 2 und 3 angedeutete Heckseite 1a aufweist.

Wie aus den Figuren 2 und 3 ersichtlich, weist die Arbeitsmaschine 1 zum Anbringen des Arbeitsgerätes 10 an ihrer Heckseite bzw. dem hinteren Maschinenlängsende 1a eine als Dreipunktaufnahme ausgebildete Mehrpunktaufnahme 2 auf, welche zwei längliche Unterlenker 3, 4, die mit vorbestimmtem Lenkerabstand LA voneinander längsseits nebeneinander angeordnet sind, und einen länglichen Oberlenker 5 aufweist, der mittig in dem Lenkerabstand LA zwischen und etwa parallel zu den Unterlenkern 3, 4 angeordnet ist.

Die Unterlenker 3, 4 weisen jeweils ein erstes Unterlenkerlängsende, an dem ein nach oben offener Fanghaken 3a bzw. 4a vorgesehen ist, und ein zweites Unterlenkerlängsende 3b bzw. 4b auf, das schwenkbar an der Heckseite 1a der Arbeitsmaschine 1 gelagert ist, so dass der Unterlenker 3, 4 um eine sich quer zur Längsrichtung LR der Arbeitsmaschine 1 und etwa horizontal verlaufende Schwenkachse S1 bzw. S2 verschwenkbar und damit der Fanghaken 3a bzw. 4a höhenverstellbar ist.

Die Unterlenker 3, 4 sind jeweils über eine per Gewindespindel längenverstellbare Hubstange bzw. Hubstrebe 6 (in Fig. 2 ist nur eine Hubstrebe 6 ersichtlich) schwenkbar mit einem jeweiligen schwenkbar an der Heckseite 1a der Arbeitsmaschine 1 gelagerten Hubarm 7 (in Fig. 2 ist nur ein Hubarm 7 ersichtlich) verbunden. Um eine Schwenkbewegung des Hubarms 7 und dadurch eine Schwenkbewegung des damit verbundenen Unterlenkers 3, 4 zu bewirken bzw. anzutreiben, ist für jeden Hubarm 7 ein Hydraulikzylinder 8 vorgesehen, welcher mit einem Längsende (Kolbenstange oder Zylinder) schwenkbar an der Heckseite 1 a der Arbeitsmaschine 1 gelagert ist und mit dem anderen Längsende (Zylinder oder Kolbenstange) schwenkbar mit dem Hubarm 7 verbunden ist.

Durch die Längenverstellbarkeit der Hubstrebe 6 kann eine Höhe des jeweiligen Unterlenkers 3, 4 bzw. eine Höhe von dessen Fanghaken 3a, 4a voreingestellt werden.

Der Oberlenker 5 weist in zu den Unterlenkern 3, 4 ähnlicher Weise ein erstes Oberlenkerlängsende, an dem ein nach unten offener Fanghaken 5a vorgesehen ist, und ein zweites Unterlenkerlängsende auf, das schwenkbar an der Heckseite 1 a der Arbeitsmaschine 1 gelagert ist, so dass der Oberlenker 5 verschwenkbar und damit der Fanghaken 5a höhenverstellbar ist. Obwohl hier nicht näher gezeigt und beschrieben, ist auch der Antrieb für die Schwenkbewegung des Oberlenkers 5 in zu den Unterlenkern 3, 4 ähnlicher Weise realisiert.

Gemäß den hier beschriebenen Ausführungsformen der Erfindung ist das Arbeitsgerät 10 als bezüglich der Arbeitsmaschine 1 seitenaufgehängtes Heckmähwerk ausgebildet. Das Arbeitsgerät 10 ist dabei in Fig. 1 in einer Abgelegtstellung gezeigt, in der das Arbeitsgerät 10 nicht an der Arbeitsmaschine 1 angebracht ist und auf einer Ablagefläche B wie z.B. dem Boden abgelegt ist, so dass es für die Arbeitsmaschine 1 zum Aufnehmen mittels der Mehrpunktaufnahme 2 zugänglich ist.

Wie aus Fig. 1 ersichtlich, weist das Arbeitsgerät 10 ein als Dreipunktbock ausgebildetes Traggestell 20 und ein zum Mähen von z.B. Gras eingerichtetes Arbeitsorgan 100 (in Fig. 1 nur teilweise gezeigt) auf, das an einem ersten Gestelllängsende 20a des Traggestells 20 über eine horizontal (und in einem Angehängtzustand des Arbeitsgerätes 10 an der Arbeitsmaschine 1 in Längsrichtung LR der Arbeitsmaschine 1) verlaufende Gelenkachse bzw. Arbeitsorganschwenkachse S3 schwenkbar mit dem Traggestell 20 verbunden ist.

An dem Traggestell 20 sind zum Koppeln mit den Fanghaken 3a, 4a, 5a der Mehrpunktaufnahme 2 der Arbeitsmaschine 1 drei Fangprofile 30, 35, 40 vorgesehen.

Genauer sind ein erstes Fangprofil 30 und ein zweites Fangprofil 35 für die Fanghaken 3a, 4a der Unterlenker 3, 4 der Mehrpunktaufnahme 2 mit dem vorbestimmten Lenkerabstand LA voneinander nebeneinander an einer Gestelllängsseite 21 des Traggestells 20 angeordnet und ist ein drittes Fangprofil 40 für den Fanghaken 5a des Oberlenkers 5 der Mehrpunktaufnahme 2 mittig zwischen den ersten und zweiten Fangprofilen 30, 35 an einem oberen Flansch 22 des Traggestells 20 angeordnet.

Die ersten und zweiten Fangprofile 30, 35 sind dabei so an der Gestelllängsseite 21 des Traggestells 20 angeordnet, dass in der in Fig. 1 gezeigten Abgelegtstellung des Arbeitsgerätes 1 durch mittels Anhebens der Fanghaken 3a, 4a der Unterlenker 3, 4 Unterfangen der ersten und zweiten Fangprofile 30, 35 das Traggestell 20 mit der Gestelllängsseite 21 quer zur Längsrichtung LR der Arbeitsmaschine 1 verlaufend an der Mehrpunktaufnahme 2 aufnehmbar ist.

Das dritte Fangprofil 40 ist wiederum so an dem oberen Flansch 22 des Traggestells 20 angeordnet, dass der Fanghaken 5a des Oberlenkers 5 der Mehrpunktaufnahme 2 durch Absenken dessen mit dem dritten Fangprofil 40 in Eingriff bringbar ist und dadurch das Traggestell 20 sicher an der Mehrpunktaufnahme 2 bzw. der Heckseite 1a der Arbeitsmaschine 1 anbringbar ist.

Wie aus Fig. 1 ersichtlich, ist an dem Traggestell 20 außerdem eine Stützvorrichtung 50 vorgesehen, welche eingerichtet ist, dass Traggestell 20 in der Abgelegtstellung des Arbeitsgerätes 10 auf der Ablagefläche B so abzustützen, dass das sich näher am mit dem Arbeitsorgan 100 versehenen Gestelllängsende 20a befindende erste Fangprofil 30 um ein vorbestimmtes Differenzmaß DM höher als das sich näher am entgegengesetzten Gestelllängsende 20b befindende zweite Fangprofil 35 angeordnet ist. Mit anderen Worten ist in der Abgelegtstellung des Arbeitsgerätes 10 das zweite Fangprofil 35 um das Differenzmaß DM tiefer als das erste Fangprofil 30 angeordnet.

Das Differenzmaß beträgt dabei bevorzugt zwischen 10 Millimeter und 50 Millimeter und noch bevorzugter etwa 20 Millimeter.

Die Stützvorrichtung 50 weist eine an der Gestelllängsseite 21 angebrachte rohrförmige Hülse 51 und eine in der Hülse 51 verschiebbar aufgenommene längliche Stütze 52 auf, welche sich über einen Stützfuß 53 auf der Ablagefläche B abstützt. Um eine Ausfahrlänge der Stütze 52 definiert einstellen zu können, ist die Stütze 52 in der Hülse 51 auf vorbestimmte Positionen einstellbar und in diesen Positionen z.B. mittels durchgesteckter Sicherungsbolzen (nicht bezeichnet) relativ zur Hülse 51 fixierbar. Die Ausfahrlänge der Stütze 52 kann dabei selektiv so eingestellt werden, dass das Traggestell 20 in der Abgelegtstellung des Arbeitsgerätes 10 gegenüber der Ablagefläche B verkippt ist, so dass das erste Fangprofil 30 um das Differenzmaß DM höher als das zweite Fangprofil 35 angeordnet ist. Im Ergebnis ist die Stützvorrichtung 50 höhenverstellbar ausgebildet ist, so dass das Differenzmaß DM selektiv veränderbar ist. Dazu kann auch eine stufenlos höhenverstellbare Stützvorrichtung 50 vorgesehen werden. Diese könnte beispielsweise durch ein Einstellelement am Stützfuß 53 realisiert werden, welches mittels einer Spindel unterschiedlich weit in die Stütze 52 eingeschraubt und fixiert werden kann.

Der Winkel um den das Traggestell 20 gegenüber der Ablagefläche B verkippt ist, kann auch durch die Höhenlage der Arbeitsorganschwenkachse S3 beeinflusst werden. Das Arbeitsorgan 100 welches außerhalb des abgebildeten Bereichs gelenkig mit einer Arbeitseinheit 101 - wie beispielsweise einem Mähbalken - verbunden ist, liegt in der Abgelegtstellung an der Arbeitseinheit 101 auf, welche ihrerseits auf der Ablagefläche B steht. Dazu ist an der Arbeitseinheit 101 vorzugsweise ein Anschlagstück 99 vorgesehen, das bevorzugter Weise mit einem Gummipuffer als Auflagefläche für das Arbeitsorgan 100 versehen ist. Durch die Verlängerung dieses Anschlagsstücks 99 erhöht sich die Ablageposition des Arbeitsorgans 100 und damit auch die Höhenlage der Arbeitsorganschwenkachse S3. Mit der Erhöhung der Arbeitsorganschwenkachse S3 wird das Traggestell 20 weiter verkippt und das Differenzmaß DM vergrößert.

Gemäß einer Ausführungsform der Erfindung kann zusätzlich oder alternativ zur Konfiguration der Stützvorrichtung 50 eine jeweilige höhenmäßige Anordnung der ersten und zweiten Fangprofile 30, 35 an der Gestelllängsseite 21 des Traggestells 20 so realisiert sein, dass in der Abgelegtstellung des Arbeitsgerätes 10 das erste Fangprofil 30 um das Differenzmaß DM höher als das zweite Fangprofil 35 angeordnet ist.

Gemäß einer Ausführungsform der Erfindung können die ersten und zweiten Fangprofile 30, 35 jeweils höhenmäßig unverstellbar an der Gestelllängsseite 21 des Traggestells 20 angeordnet sein.

Alternativ dazu kann gemäß einer Ausführungsform der Erfindung zumindest eines der ersten und zweiten Fangprofile 30, 35 oder können beide der ersten und zweiten Fangprofile 30, 35 höhenverstellbar an der Gestelllängsseite 21 des Traggestells 20 angebracht sein, so dass das höhenanordnungsmäßige Differenzmaß DM zwischen den ersten und zweiten Fangprofilen 30, 35 teilweise oder vollständig realisierbar ist.

Zur Realisierung der Höhenverstellbarkeit von einem oder beiden der ersten und zweiten Fangprofile 30, 35, welche jeweils als Fangkugel ausgebildet an einen jeweiligen Fangbolzen 31 bzw. 36 angeformt sind, der lagegesichert in eine an der Gestelllängsseite 21 des Traggestells 20 angebrachte jeweilige Halterung 32 bzw. 37 eingesteckt ist, kann für die Halterung 32, 37 eine Linearführung 33 bzw. 38 (in Fig. 1 nur schematisch als Doppelpfeil dargestellt) vorgesehen sein, so dass die Halterung 32, 37 und damit das zugehörige erste bzw. zweite Fangprofil 30, 35 in Höhenrichtung linear an der Gestelllängsseite 21 des Traggestells 20 verstellbar ist.

Bevorzugt ist gemäß der Erfindung zum Antreiben einer solchen Höhenverstellung von erstem bzw. zweitem Fangprofil 30, 35 kein Motor vorgesehen, sondern wird die Höhenverstellung manuell durchgeführt. Die Höhenverstellbarkeit von erstem bzw. zweitem Fangprofil 30, 35 ist somit motorfrei realisiert.

In Zusammenfassung der oben beschriebenen Ausführungsformen der Erfindung ist somit das Traggestell 20 so eingerichtet, dass in der Abgelegtstellung des Arbeitsgerätes 10 das erste Fangprofil 30, welches sich näher am mit dem Arbeitsorgan 100 versehenen Gestelllängsende 21 a befindet, um das gewünschte Differenzmaß DM höher als das zweite Fangprofil 35 angeordnet ist.

Dadurch, dass gemäß der Erfindung in der Abgelegtstellung des Arbeitsgerätes 10 das zweite Fangprofil 35 um das Differenzmaß DM tiefer als das erste Fangprofil 30 angeordnet ist, wird beim Aufnehmen bzw. Ankuppeln des Arbeitsgerätes 10 an der Arbeitsmaschine 1 mittels der Mehrpunktaufnahme 2 immer zuerst das zweite Fangprofil 35 vom Fanghaken 3a des dazu korrespondierenden Unterlenkers 3 eingefangen bzw. mit diesem verrastet. Anschließend wird durch Hochbewegen des Unterlenkers 3 das Traggestell 20 um die Arbeitsorganschwenkachse S3 nach oben gedreht, bis auch das erste Fangprofil 30 vom Fanghaken 4a des dazu korrespondierenden Unterlenkers 4 eingefangen wird bzw. mit diesem verrastet. Auf diese Weise kann das Arbeitsgerät 10 stets zuverlässig von der Mehrpunktaufnahme 2 des Arbeitsgerätes 10 aufgenommen werden.

**Bezugszeichenliste**

| | | | |
|---|---|---|---|
| 1 | Arbeitsmaschine | S1, S2 | Schwenkachse |
| 1a | Heckseite | S3 | Arbeitsorganschwenkachse |
| 2 | Mehrpunktaufnahme | | |
| 3, 4 | Unterlenker | | |
| 3a, 4a | Fanghaken | | |
| 3b, 4b | Unterlenkerlängsende | | |
| 5 | Oberlenker | | |
| 5a | Fanghaken | | |
| 6 | Hubstrebe | | |
| 7 | Hubarm | | |
| 8 | Hydraulikzylinder | | |
| 10 | Arbeitsgerät | | |
| 20 | Traggestell | | |
| 20a | Gestelllängsende | | |
| 20b | Gestelllängsende | | |
| 21 | Gestelllängsseite | | |
| 22 | Flansch | | |
| 30 | Fangprofil | | |
| 31 | Fangbolzen | | |
| 32 | Halterung | | |
| 33 | Linearführung | | |
| 35 | Fangprofil | | |
| 36 | Fangbolzen | | |
| 37 | Halterung | | |
| 38 | Linearführung | | |
| 40 | Fangprofil | | |
| 50 | Stützvorrichtung | | |
| 51 | Hülse | | |
| 52 | Stütze | | |
| 53 | Stützfuß | | |
| 99 | Anschlagstück | | |
| 100 | Arbeitsorgan | | |
| 101 | Arbeitseinheit | | |
| B | Ablagefläche | | |
| DM | Differenzmaß | | |
| LA | Lenkerabstand | | |
| LR | Längsrichtung | | |

## Patentansprüche

1. Arbeitsgerät (10) für eine landwirtschaftliche Arbeitsmaschine (1), welche zum Anbringen des Arbeitsgerätes (10) an einem Maschinenlängsende (1a) eine Mehrpunktaufnahme (2) mit zwei länglichen Unterlenkern (3, 4) aufweist, die mit vorbestimmtem Lenkerabstand (LA) voneinander längsseits nebeneinander angeordnet sind und die jeweils ein erstes Unterlenkerlängsende, an dem ein nach oben offener Fanghaken (3a, 4a) vorgesehen ist, und ein zweites Unterlenkerlängsende (3b, 4b) aufweisen, das so an der Arbeitsmaschine (1) gelagert ist, dass der Fanghaken (3a, 4a) höhenverstellbar ist,
wobei das Arbeitsgerät (10) aufweist:
ein Traggestell (20) mit einem Gestelllängsende (20a), an dem ein Arbeitsorgan (100) des Arbeitsgerätes (10) vorgesehen ist, und zwei Fangprofilen (30, 35), die mit dem vorbestimmten Lenkerabstand (LA) nebeneinander an einer Gestelllängsseite (21) des Traggestells (20) angeordnet sind, so dass das Traggestell (20) in einer Abgelegtstellung des Arbeitsgerätes (10) mit der Gestelllängsseite (21) quer zu einer Maschinenlängsrichtung (LR) durch Anheben der Fanghaken (3a, 4a) und Unterfangen der beiden Fangprofile (30, 35) an der Mehrpunktaufnahme (2) aufnehmbar ist,
**dadurch gekennzeichnet, dass** das Traggestell (20) so eingerichtet ist, dass in der Abgelegtstellung des Arbeitsgerätes (10) ein Fangprofil (30), welches sich näher am mit dem Arbeitsorgan (100) versehenen Gestelllängsende (20a) befindet, um ein vorbestimmtes Differenzmaß (DM) höher als das andere Fangprofil (35) der beiden Fangprofile (30, 35) angeordnet ist.

2. Arbeitsgerät (10) gemäß Anspruch 1, wobei an dem Traggestell (20) eine Stützvorrichtung (50) vorgesehen ist, welche eingerichtet ist, das Traggestell (20) in der Abgelegtstellung des Arbeitsgerätes (10) so auf einer Ablagefläche (B) abzustützen, dass das sich näher am mit dem Arbeitsorgan (100) versehenen Gestelllängsende (20a) befindende eine Fangprofil (30) um das vorbestimmte Differenzmaß (DM) höher als das andere Fangprofil (35) der beiden Fangprofile (30, 35) angeordnet ist.

3. Arbeitsgerät (10) gemäß Anspruch 2, wobei die Stützvorrichtung (50) höhenverstellbar ausgebildet ist, so dass das Differenzmaß (DM) selektiv veränderbar ist.

4. Arbeitsgerät (10) gemäß einem der Ansprüche 1 bis 3, wobei eine jeweilige höhenmäßige Anordnung der beiden Fangprofile (30, 35) an der Gestelllängsseite (21) des Traggestells (20) so realisiert ist, dass in der Abgelegtstellung des Arbeitsgerätes (10) das sich näher am mit dem Arbeitsorgan (100) versehenen Gestelllängsende (20a) befindende eine Fangprofil (30) um das vorbestimmte Differenzmaß (DM) höher als das andere Fangprofil (35) angeordnet ist.

5. Arbeitsgerät (10) gemäß einem der Ansprüche 1 bis 4, wobei zumindest eines der beiden Fangprofile (30, 35) höhenverstellbar an der Gestelllängsseite (21) des Traggestells (20) angebracht ist, so dass das höhenanordnungsmäßige Differenzmaß (DM) zwischen den Fangprofilen (30, 35) realisierbar ist.

6. Arbeitsgerät (10) gemäß Anspruch 5, wobei die Höhenverstellbarkeit des Fangprofils (30, 35) motorfrei realisiert ist.

7. Arbeitsgerät (10) gemäß Anspruch 5 oder 6, wobei die Höhenverstellbarkeit des Fangprofils (30, 35) mittels einer Linearführung (33, 38) an der Gestelllängsseite (21) des Traggestells (20) realisiert ist.

8. Arbeitsgerät (10) gemäß einem der Ansprüche 1 bis 7, wobei das Differenzmaß (DM) zwischen 10 Millimeter und 50 Millimeter beträgt.

9. Arbeitsgerät (10) gemäß Anspruch 8, wobei das Differenzmaß (DM) 20 Millimeter beträgt.

10. Arbeitsgerät (10) gemäß einem der Ansprüche 1 bis 9, wobei das Arbeitsgerät (10) als ein seitenaufgehängtes Heckmähwerk ausgebildet ist.

## Claims

1. A working implement (10) for an agricultural working machine (1) which for mounting the working implement (10) to a longitudinal end (1a) of the machine has a multi-point mounting (2) with two elongate lower links (3, 4) which are arranged in mutually juxtaposed relationship at their long sides with a predetermined link spacing (LA) from each other and which respectively have a first lower link longitudinal end at which an upwardly open catch hook (3a, 4a) is provided and a second lower link longitudinal end (3b, 4b) which is so mounted to the working machine (1) that the catch hook (3a, 4a) is height-adjustable, wherein the working implement (10) has:
a support frame (20) having a frame longitudinal end (20a) at which there is provided a working member (100) of the working implement (10) and two catch profiles (30, 35) which are arranged in mutually juxtaposed relationship with the predetermined link spacing (LA) at a longitudinal frame side (21) of the support frame (20) so that the support frame (20) can be mounted to the multi-point mounting (2) in a set-down position of the working implement (10) with the longitudinal frame side (21) transversely relative to a longitudinal direction (LR) of the machine by lifting the catch hooks (3a, 4a) and catching under the two catch profiles (30, 35),
**characterised in that** the support frame (20) is so adapted that in the set-down position of the working implement (10) a catch profile (30) which is disposed closer to the longitudinal frame end (20a) provided with the working member (100) is arranged higher by a predetermined difference (DM) than the other catch profile (35) of the two catch profiles (30, 35).

2. A working implement (10) according to claim 1 wherein provided on the support frame (20) is a support device (50) adapted to support the support frame (20) in the set-down position of the working implement (10) on a supporting surface (B) in such a way that the one catch profile (30) which is closer to the longitudinal frame end (20a) provided with the working member (100) is arranged higher by the predetermined difference (DM) than the other catch profile (35) of the two catch profiles (30, 35).

3. A working implement (10) according to claim 2 wherein the support device (50) is height-adjustable so that the difference (DM) is selectively variable.

4. A working implement (10) according to one of claims 1 to 3 wherein a respective height-wise arrangement of the two catch profiles (30, 35) at the longitudinal frame side (21) of the support frame (20) is so implemented that in the set-down position of the working implement (10) the one catch profile (30) which is disposed closer to the longitudinal frame end (20a) provided with the working member (100) is arranged higher by the predetermined difference (DM) than the other catch profile (35).

5. A working implement (10) according to one of claims 1 to 4 wherein at least one of the two catch container profiles (30, 35) is mounted height-adjustably to the longitudinal frame side (21) of the support frame (20) so that the difference (DM) in respect of the height arrangement between the catch profiles (30, 35) can be implemented.

6. A working implement (10) according to claim 5 wherein the height adjustability of the catch profile (30, 35) is implemented in motor-free fashion.

7. A working implement (10) according to claim 5 or claim 6 wherein the height adjustability of the catch profile (30, 35) is implemented by means of a linear guide (33, 38) at the longitudinal frame side (21) of the support frame (20).

8. A working implement (10) according to one of claims 1 to 7 wherein the difference (DM) is between 10 millimetres and 50 millimetres.

9. A working implement (10) according to claim 8 wherein the difference (DM) is 20 millimetres.

10. A working implement (10) according to one of claims 1 to 9 wherein the working implement (10) is a side-mounted rear mowing mechanism.

## Revendications

1. Appareil de travail (10) pour une machine de travail agricole (1), laquelle comporte, pour monter l'appareil de travail (10) sur une extrémité longitudinale de machine (1a), un attelage multipoints (2) avec deux bras inférieurs allongés (3, 4) qui sont disposés côte à côte avec un écartement de bras prédéterminé (LA) dans le sens de la longueur et qui comportent chacun une première extrémité longitudinale de bras inférieur, sur laquelle est prévu un crochet de prise (3a, 4a) ouvert vers le haut, et une seconde extrémité longitudinale de bras inférieur (3b, 4b) qui est montée sur la machine de travail (1) de façon que le crochet de prise (3a, 4a) soit déplaçable en hauteur, l'appareil de travail (10) comportent :
un bâti porteur (20) avec une extrémité longitudinale de bâti (20a), sur laquelle est prévu un organe de travail (100) de l'appareil de travail (10), et avec deux profilés de prise (30, 35) qui sont disposés côte à côte sur un côté longitudinal de bâti (21) du bâti porteur (20) avec un écartement de bras prédéterminé (LA), de façon que, dans une position dételée de l'appareil de travail (10), le bâti porteur (20) puisse être saisi au moyen de l'attelage multipoints (2) par le côté longitudinal de bâti (21) transversalement à une direction longitudinale de machine (LR) en levant les crochets de prise (3a, 4a) et en prenant par-dessous les deux profilés de prise (30, 35),
**caractérisé en ce que** le bâti porteur (20) est agencé de façon que, dans la position dételée de l'appareil de travail (10), un profilé de prise (30), qui est le plus proche de l'extrémité longitudinale de bâti (20a) munie de l'organe de travail (100), soit disposé plus haut, d'une valeur égale à une cote différentielle prédéterminée (DM), que l'autre profilé de prise (35) des deux profilés de prise (30, 35).

2. Appareil de travail (10) selon la revendication 1, sur le bâti porteur (20) étant prévu un dispositif d'appui (50) qui est agencé de façon que, dans la position dételée de l'appareil de travail (10), le bâti porteur (20) prenne appui sur une surface d'entreposage (B) de façon que le profilé de prise (30) le plus proche de l'extrémité longitudinale de bâti (20a) munie de l'organe de travail (100) soit disposé plus haut, d'une valeur égale à la cote différentielle prédéterminée (DM), que l'autre profilé de prise (35) des deux profilés de prise (30, 35).

3. Appareil de travail (10) selon la revendication 2, le dispositif d'appui (50) étant conçu réglable en hauteur, de façon que la cote différentielle (DM) soit modifiable de manière sélective.

4. Appareil de travail (10) selon une des revendications 1 à 3, un agencement en hauteur respectif des deux profilés de prise (30, 35) sur le côté longitudinal de bâti (21) du bâti porteur (20) étant réalisé de façon que, dans la position dételée de l'appareil de travail (10), l'un (30) des profilés de prise le plus proche de l'extrémité longitudinale de bâti (20a) munie de l'organe de travail (100) soit disposé plus haut, d'une valeur égale à la cote différentielle prédéterminée (DM), que l'autre profilé de prise (35)

5. Appareil de travail (10) selon une des revendications 1 à 4, au moins un des deux profilés de prise (30, 35) étant monté réglable en hauteur sur le côté longitudinal de bâti (21) du bâti porteur (20), de façon à pouvoir réaliser entre les profilés de prise (30, 35) la cote différentielle (DM) d'agencement en hauteur.

6. Appareil de travail (10) selon la revendication 5, la possibilité de réglage en hauteur du profilé de prise (30, 35) étant réalisée sans moteur.

7. Appareil de travail (10) selon la revendication 5 ou 6, la possibilité de réglage en hauteur du profilé de prise (30, 35) étant réalisée au moyen d'un guide linéaire (33, 38) sur le côté longitudinal de bâti (21) du bâti porteur (20).

8. Appareil de travail (10) selon une des revendications 1 à 7, la cote différentielle (DM) étant comprise entre 10 millimètres et 50 millimètres.

9. Appareil de travail (10) selon la revendication 8, la cote différentielle (DM) étant égale à 20 millimètres.

10. Appareil de travail (10) selon une des revendications 1 à 9, l'appareil de travail (10) étant conformé en faucheuse arrière à suspension latérale.
